# EUROPÄISCHE PATENTSCHRIFT

(11) **EP 1 151 198 B1**
(45) Veröffentlichungstag und Bekanntmachung des Hinweises auf die Patenterteilung: **28.01.2004**
(21) Anmeldenummer: 00989915.4
(22) Anmeldetag: 29.11.2000
(51) Int. Cl.: F04B 45/047, F04B 45/04, F16F 13/26

(54) **PNEUMATISCHES BAUELEMENT FÜR EIN SCHALTLAGER**
PNEUMATIC COMPONENT FOR A CONTROL BEARING
COMPOSANT PNEUMATIQUE POUR PALIER DE COMMUTATION

(30) Priorität: 02.12.1999 DE 19958013
(43) Veröffentlichungstag der Anmeldung: 07.11.2001
(73) Patentinhaber: WOCO AVS GmbH, 63628 Bad Soden-Salmünster (DE)
(72) Erfinder: WOLF, Franz, Josef, 63628 Bad Soden-Salmünster (DE); GRÜNIG, Volker, 04600 Altenburg (DE)
(74) Vertreter: Weber-Bruls, Dorothée, Dr.
(86) Internationale Anmeldenummer: PCT/EP2000/011953
(87) Internationale Veröffentlichungsnummer: WO 2001/040654

(56) Entgegenhaltungen:
- DE-A- 3 210 731
- DE-A- 19 910 920
- US-A- 4 743 169
- US-A- 4 776 771
- US-A- 4 966 533

## Beschreibung

Die Erfindung betrifft ein pneumatisches Bauelement, speziell ein aktives pneumatisches Bauelement.

Insbesondere betrifft die Erfindung ein miniaturisiertes Kombinationsbauelement aus einer Schwingmembranpumpe und einem Ventilkopf mit einem Einlassanschluss und einem Auslassanschluss, an dem verschiedene pneumatische Schaltzustände erzeugt werden können.

Speziell betrifft die Erfindung ein solches pneumatisches Bauelement zum Schalten von pneumatisch schaltbaren Hydrolagern, wie sie aus der Kraftfahrzeugtechnik bekannt sind.

Ein solches pneumatisch schaltbares Hydrolager ist beispielsweise aus der deutschen Offenlegungsschrift DE 32 10 731 A1 bekannt. Unter der Ausgleichsmembran eines prinzipiell herkömmlich aufgebauten Hydrolagers ist in einem napfförmig ausgebildeten Widerlageranschlussstück ein pneumatischer Druckraum ausgebildet, in dem ein variabler pneumatischer Überdruck als Stelldruck aufgebaut werden kann, der durch eine Beaufschlagung der Ausgleichsmembran unmittelbar die Steifigkeit des Hydrolagers beeinflusst. Dieser pneumatische Stelldruck kann nach dem Stand der Technik entweder insgesamt außenerzeugt und außengeregelt sein, oder aber lediglich außenerzeugt und, bezogen auf das Gehäuse des Hydrolagers, innengeregelt sein. Diese Innenregelung des pneumatischen Stelldrucks erfolgt dabei durch die Ausgleichsmembran selbst, die je nach Verformung durch das Dämpfungsfluid in der Arbeitskammer des Hydrolagers ein Entlüftungsventil durch Aufrollen und Abrollen öffnet und schliesst sowie einen Ventilstössel zu einer pneumatischen Konstantdruckquelle aufdrückt oder zum Verschliessen durch eine Rückstellfeder freigibt. Ein freies pneumatisches Anwählen und Schalten des Hydrolagers nach dem Stand der Technik ist demnach nur durch einen pneumatischen Druckgenerator in Verbindung mit einem Echtzeitregler zu erreichen, die beide, offensichtlich wegen ihrer erforderlichen Baugrösse, ausserhalb der Baueinheit des Hydrolagers realisiert werden müssen. Dies sicher nicht zuletzt auch wegen der vergleichsweise großen zu bewegenden pneumatischen Volumina.

Ausgehend von diesem Stand der Technik liegt der Erfindung die technische Aufgabe zugrunde, eine aktive pneumatische Baueinheit zu schaffen, die so klein ausgelegt werden kann, dass sie mit den beiden Funktionskomponenten Druckerzeugung und Drucksteuerung im Gehäuse eines herkömmlich dimensionierten Hydrolagers integriert werden kann.

Dieses technische Problem löst die Erfindung durch ein pneumatisches Bauelement, das die Merkmale des Patentanspruchs 1 aufweist.

Die Unteransprüche offenbaren Ausgestaltungen der Erfindung.

Der wesentliche Vorteil, der mit dem Bauelement der Erfindung erzielbar ist, liegt in seiner einfachen und kompakten Konfiguration. Durch die unmittelbare konstruktive Integration des 3/2-Wegeventils im und als Kopf der Schwingmembranpumpe und die dadurch erzielte unmittelbare Ansteuerbarkeit des Ventils von der Pumpe aus und durch die Pumpe, kann nicht nur eine miniaturisierte Bauweise erzielt werden, sondern sind zur Betriebssteuerung sowohl der Schaltzustände des 3/2-Wegeventils als auch der Pumpenzustände zusammen nicht mehr als zwei Niederspannungszuleitungen erforderlich. Dies ermöglicht den Einbau dieser pneumatischen Schaltelemente direkt in das Gehäuse eines zu schaltenden Hydrolagers.

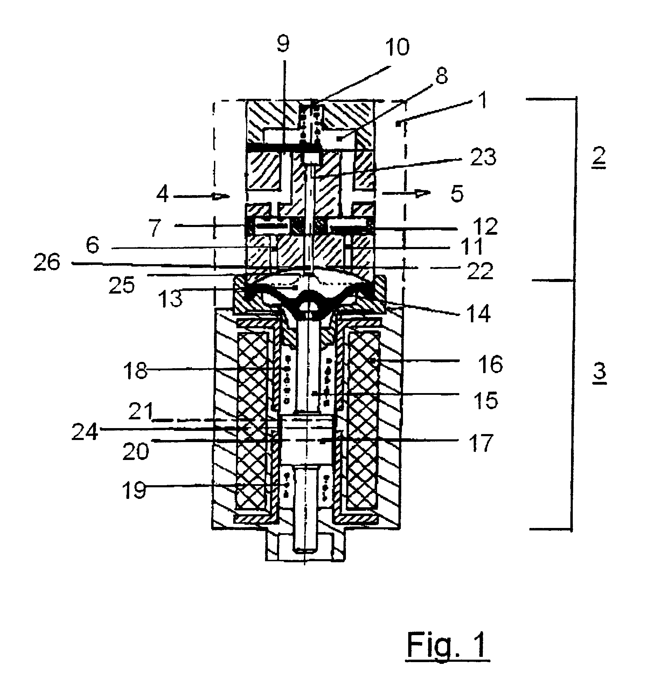

Die Erfindung ist im folgenden anhand eines Ausführungsbeispiels in Verbindung mit der Zeichnung näher erläutert. Dabei zeigt die einzige Figur, nämlich die
Fig. 1 im Axialschnitt ein pneumatisches Bauelement, das die Merkmale der Erfindung aufweist.

In einem Gehäuse 1 sind ein 3/2-Wegeventil 2 und eine Schwingmembranpumpe 3 zu einer baulichen und funktionellen Baueinheit zusammengefasst. Das Mehrwegeventil 2 weist einen Einlassstutzen 4 und einen Auslassstutzen 5 auf. Der Einlassstutzen 4 steht einerseits mit einem Einlasskanal 6 in Verbindung, in dem ein Einlassventil 7 angeordnet ist.

Der Einlassstutzen 4 steht andererseits über eine Belüftungsleitung 8, in der ein unter der Vorspannung durch eine Feder 10 geschlossen gehaltenes Membranventil 9 angeordnet ist, mit dem Auslassstutzen 5 des Bauelementes in Verbindung.

Der Auslassstutzen 5 des Bauelementes steht weiterhin mit einem Auslasskanal 11 in Verbindung, in der ein unter Verschlussvorspannung stehendes Auslassventil 12 angeordnet ist.

Der Einlasskanal 6 und der Auslasskanal 11 münden in die Pumpenarbeitskammer 13 der Schwingmembranpumpe 3. Die Pumpenkammer 13 ist auf der gegenüberliegenden Seite von der Schwingmembran 14 begrenzt. Die Schwingmembran 14 ist mittels eines stösselartigen Ankers 15 eines Hubkolbenmagneten mit einer Spule 16 angetrieben. Der stösselartige Anker 15 weist im mittleren Bereich seiner axialen Erstreckung eine trommelartige zylindrische Verstärkung 17 auf, die im unbestromten Zustand der Magnetspule 16 durch zwei Rückstellfedern 18, 19 in einer definierten Ruhelage 20 gehalten ist.

Bei Dauerbestromung der Spule 16 wird der Zylinder 17, bezogen auf seine axiale Mitte, bis in die Position 21 angehoben und dort gehalten, die dem maximalen Hub 22 der Pumpenmembran 14 entspricht. In dieser Position öffnet die Membran 14 über eine Verschiebung des in die Pumpenkammer 13 hineinragenden Stössels 23 das unter der Vorspannung durch die Feder 10 sonst geschlossen gehaltene Membranventil 9. Der Einlassstutzen 4 ist dadurch unmittelbar und belüftend mit dem Auslassstutzen 5 verbunden.

Bei Bestromung mit einer Rechteckimpulsfrequenz werden der Zylinder 17 und damit auch der Anker 15 in regelmäßige Schwingungen versetzt, deren Amplitude, bezogen auf die axiale Mitte des Zylinders 17, gleich dem Abstand zwischen den axialen Positionen 20 und 24 ist. Dabei wird die Schwingmembran 14 bis auf die in der Fig. 1 mit unterbrochener Linie dargestellte Position angehoben, in der sie den Fuß 26 des Stössels 23 gerade nicht berührt, so dass also das Belüftungsventil 9 im normalen Betriebszustand der Schwingmembranpumpe 3 geschlossen bleibt und am Auslassstutzen 5 ein pneumatischer Überdruck auftritt, beziehungsweise verfügbar ist.

## Patentansprüche

1. Aktives pneumatisches Bauelement, insbesondere zum pneumatischen Schalten eines Hydrolagers,
**gekennzeichnet durch**
die Kombination einer elektrisch angetriebenen Schwingmembranpumpe (3) mit einem Mehrwegeventil (2) in einer integrierten Baueinheit (1) in der Weise, daß ein die Schwingmembran (14) antreibender Anker (15, 17) auch die Ventilfunktionen des Mehrwegeventils schaltet.

2. Bauelement nach Anspruch 1,
**gekennzeichnet durch**
einen zur Umgebungsatmosphäre offenen Einlaßstutzen (4) und einen Auslaßstutzen (5), an dem einer der drei Schaltzustände BELÜFTET, GESCHLOSSEN und DRUCKBEAUFSCHLAGT wahlweise einstellbar ist.

3. Bauelement nach einem der Ansprüche 1 oder 2,
**gekennzeichnet durch**
eine vor der Pumpenmembran (14) ausgebildete Pumpenkammer (13), in die sich ein Einlaßkanal (6) und ein Auslaßkanal (11) öffnen, und in die zusätzlich unter Beaufschlagung **durch** eine Rückstellfeder (10) der Fuß (26) eines Stößels (23) hineinragt, dessen Kopf bei einem Herausdrücken des Stößelfußes (26) aus der Pumpenkammer (13) ein Öffnungsventil (9) des über der Pumpenkammer angeordneten Mehrwegeventils (2) öffnet, das den Einlaßstutzen (4) des Bauelementes (1) unmittelbar mit dessen Auslaßstutzen (5) verbindet, wobei dieses Herausdrücken des Stößelfußes (26) aus der Pumpenkammer (13) **durch** die Pumpenmenbran (14) oder einen auf dieser speziell zu diesem Zweck ausgebildeten domartigen Anschlag in der einem Hubmaximum (22) der Pumpenmembran (14) entsprechenden Stellung bewirkt wird.

4. Bauelement nach einem der Ansprüche 1 bis 3,
**gekennzeichnet durch**
einen bei normalem Pumpenbetrieb oberen Hubumkehrpunkt (25) der Schwingpumpenmenbran (14), der, bezogen auf die Richtung des Arbeitshubs der Pumpe, unterhalb der tiefsten Anschlagfläche des Stößelfußes (26) liegt.

5. Bauelement nach einem der Ansprüche 1 bis 4,
**gekennzeichnet durch**
eine **durch** Rückholfedern (18, 19) positiv eingestellte Stromlos-Ruhelage der Pumpenmembran (14), die dem unteren Hubumkehrpunkt (20) der Schwingpumpenmembran (14) entspricht, und in der das im Auslaßkanal (11) der Pumpenkammer (13) integrierte Auslaßventil (12) geschlossen und damit der Auslaßstutzen (5) des Bauelementes (1) abgesperrt ist.

6. Bauelement nach einem der Ansprüche 1 bis 5,
**gekennzeichnet durch**
einen elektromagnetischen Hubkolbenantrieb (15, 16, 17) der Schwingpumpenmembran (14), der an einem die Membran beaufschlagenden stößelartigen Anker (15) in dessen axialem Mittelbereich eine kolbenartige Verstärkung trägt, die **durch** beidseitig an diesem Kolben (17) angreifende Rückstellfedern (18, 19) im unbestromten Zustand der Magnetspule (16), in Hubrichtung gesehen, unterhalb der Spulenmitte gehalten ist, also in einer Position, die dem unteren Umkehrpunkt (20) des Membranhubes entspricht, bei Dauerbestromung der Spule gegen die Kräfte der Rückstellfedern (18, 19) in eine dem Hubmaximum entsprechende Lage (21, 22) gezogen und dann dort stationär gehalten wird, und die bei Bestromung mit Gleichspannungs-Rechteckimpulsen dem normalen Arbeitshub der Schwingpumpenmembran entsprechend axial translatorisch schwingt und die Membran antreibt, wobei die Breite der beaufschlagenden Rechteckimpulse so gewählt ist, daß sie kleiner als die Breite ist, die erforderlich wäre, um die Membran bis in ihr Hubmaximum anzuheben, und der Abstand der beaufschlagenden Rechteckimpulse so gewählt ist, daß er gerade der Rückkehrzeit der Membran (14) in ihren unteren Hubumkehrpunkt (20) entspricht.

7. Verwendung des pneumatischen Bauelementes mit den Merkmalen nach einem oder mehreren der Ansprüche 1 bis 6 zum pneumatischen Schalten von mittels einer Lose entkoppelnden Hydrolagern im Kraftfahrzeug über eine Steuerkammer mit einer von der Lose gebildeten beweglichen Wand.

## Claims

1. An active pneumatic component, more particularly for pneumatic switching of a hydrobearing, **characterised by** the combination of an electrically driven reciprocating diaphragm pump (3) with a multi-way valve (2) in an integrated unit (1) in such manner than an armature (15, 17) driving the reciprocating diaphragm (14) also switches the valve functions of the multi-way valve.

2. A component according to claim 1, **characterised by** an inlet (4) open to the ambient atmosphere, and an outlet (5) at which it is possible to set optionally one of the three switched states: AERATED, CLOSED and PRESSURE-LOADED.

3. A component according to claim 1 or 2, **characterised by** a pump chamber (13) which is formed upstream of the pump diaphragm (14) and into which an inlet duct (6) and an outlet duct (11) open, and into which there projects additionally, loaded by a return spring (10), the foot (26) of a push rod (23), the head of which, when the push rod foot (26) is pressed out of the pump chamber (13), opens an opening valve (9) of the multi-way valve (2) disposed above the pump chamber, said multi-way valve (2) directly connecting the inlet (4) of the component (1) to its outlet (5), the said pressing of the push rod foot (26) out of the pump chamber (13) being effected by the pump diaphragm (14) or by a stop in the position corresponding to a maximum stroke (22) of the pump diaphragm (14), said stop being in the form of a dome formed specially for this purpose on the pump diaphragm (14).

4. A component according to any one of claims 1 to 3, **characterised by** a top stroke reversal point (25) of the reciprocating pump diaphragm (14) which, in normal pump operation, is situated below the lowest abutment surface of the push rod (26) with respect to the direction of the pump working stroke.

5. A component according to any one of claims 1 to 4, **characterised by** a currentless position of rest of the pump diaphragm (14) which is set positively by return springs (18, 19) and which corresponds to the bottom stroke reversal point (20) of the reciprocating pump diaphragm (14), and in which the outlet valve (12) integrated in the outlet duct (11) of the pump chamber (13) is closed so that the outlet (5) of the component (1) is shut off.

6. A component according to any one of claims 1 to 5, **characterised by** an electromagnetic reciprocating piston drive (15, 16, 17) for the reciprocating pump diaphragm (14), said drive having, at an armature (15) in the form of a push rod loading the diaphragm and in the axial central zone of said armature, a reinforcement in the form of a piston which is held, as considered in the direction of reciprocation, beneath the coil centre in the currentless state of the magnet coil (16), by return springs (18, 19) engaging said piston (17) on both sides, this position corresponding to the bottom reversal point (20) of the diaphragm stroke, while when current is applied continuously to the coil, said piston is pulled, against the force of the return springs (18, 19) into a position (21, 22) corresponding to the stroke maximum, and is then held stationary therein, and which, when current is applied with square DC pulses, swings in axial translation corresponding to the normal working stroke of the reciprocating pump diaphragm, and drives the diaphragm, the width of the actuating square pulses being so selected as to be smaller than the width that would be necessary to lift the diaphragm into its maximum stroke position, and the distance between the actuating square pulses is so selected that it corresponds exactly to the time of return of the diaphragm (14) into its bottom stroke reversal point (20).

7. Use of the pneumatic component having the features according to one or more of claims 1 to 6 for the pneumatic switching of motor vehicle slack-decoupled hydrobearings via a control chamber having a movable wall formed by the slack.

## Revendications

1. Élément de construction pneumatique actif, en particulier pour la commutation pneumatique d'un palier hydraulique,
**caractérisé par**
la combinaison d'une pompe à membrane oscillante (3), à entraînement électrique, avec une soupape distributrice multivoie (2) dans un ensemble de construction (1) intégré, de manière qu'un induit (15, 17), entraînant la membrane oscillante (14), serve également à la commutation des fonctions de soupape distributrice de la part de la soupape distributrice multivoie.

2. Élément de construction selon la revendication 1,
**caractérisé par**
une tubulure d'admission (4), ouverte vers l'atmosphère ambiante, et une tubulure d'échappement (5) sur laquelle peut être réglé au choix l'un des trois états de commutation AÉRÉ, FERMÉ et SOLLICITÉ EN PRESSION.

3. Élément de construction selon l'une des revendications 1 ou 2,
**caractérisé par**
une chambre de pompe (13) réalisée devant la pompe à membranes (14), chambre de pompe dans laquelle débouchent un canal d'admission (6) et un canal d'évacuation (11) et dans laquelle pénètre, en plus, avec sollicitation par un ressort de rappel (10), le pied (26) d'un poussoir (23), dont la tête, à la sortie à pressage du pied de poussoir (26) hors de la chambre de pompe (13), ouvre une soupape d'ouverture (9) de la soupape distributrice multivoie (2), disposée au-dessus de la chambre de pompe, et qui relie la tubulure d'admission (4) de l'élément de construction (1) directement à sa tubulure d'échappement (5), cette sortie, par pressage, du pied de poussoir (26) hors de la chambre de pompe (13), au moyen de la membrane de pompe (14) ou par une butée, du genre d'un dôme, réalisée sur celle-ci, spécialement dans ce but, étant provoquée à une position correspondant à une course maximale (22) de la membrane de pompe (14).

4. Élément de construction selon l'une des revendications 1 ou 3,
**caractérisé par**
un point d'inversion de course (25), en position supérieure en cas de fonctionnement normal de la pompe, pour la membrane de pompe oscillante (14), point qui est situé au-dessous de la face de butée la plus basse du pied de poussoir (26), en se référant à la direction de la course de travail de la pompe.

5. Élément de construction selon l'une des revendications 1 ou 4,
**caractérisé par**
une position de repos sans courant électrique, réglée de façon positive par des ressorts de rappel (18, 19), pour la membrane de pompe (14), position de repos correspondant au point d'inversion de course inférieure (20) de la membrane de pompe oscillante (14), et à laquelle la soupape d'échappement (12), intégrée dans le canal d'échappement (11) de la chambre de pompe (13), est fermée et, ainsi, la tubulure d'échappement (5) de l'élément de construction (1) est isolée.

6. Élément de construction selon l'une des revendications 1 ou 5,
**caractérisé par**
un dispositif d'entraînement à pistons alternatifs (15, 16, 17) électromagnétique de la membrane de pompe oscillante (14), qui, sur un induit (15), du genre d'un poussoir, sollicitant la membrane, porte, dans sa zone centrale axiale, un renforcement du genre d'un piston, renforcement qui, à l'état non alimenté électriquement de la bobine magnétique (16), au moyen de ressorts de rappel (18, 19) agissant des deux côtés sur ce piston (17), est maintenu au-dessous du centre de bobine, en observant dans la direction de la course, donc en une position qui correspond au point d'inversion inférieur (20) de la course de membrane, renforcement qui, en cas d'alimentation électrique permanent de la bobine, est tiré, à l'encontre des efforts exercés par les ressorts de rappel (18 ,19), en une position correspondant à la course maximale (21, 22) et y est, ensuite, maintenu de façon stationnaire, et les impulsions rectangulaires, en cas d'alimentation électrique avec une tension continue, faisant osciller en translation axialement, de manière correspondant à la course de travail normale de la membrane de pompe oscillante, et entraînant la membrane, sachant que la largeur des impulsions rectangulaires ayant un effet de sollicitation est choisie de manière à être inférieure à la largeur qui serait nécessaire pour lever la membrane jusqu'à son maximum de course, et l'espacement des impulsions rectangulaires assurant une sollicitation étant choisi de manière à correspondre justement au temps de retour de la membrane (14) à son point d'inversion de course inférieure (20).

7. Utilisation de l'élément de construction pneumatique présentant les caractéristiques selon l'une ou plusieurs des revendications 1 à 6, pour la commutation pneumatique de paliers hydrauliques, devant être désaccouplés au moyen d'un jeu, dans un véhicule automobile, par l'intermédiaire d'une chambre de commande comportant une paroi mobile formée par le jeu.
